# EUROPEAN PATENT APPLICATION

(11) **EP 2 452 924 A1**
(43) Date of publication of application: **16.05.2012**
(21) Application number: 11188930.9
(22) Date of filing: 14.11.2011
(51) Int. Cl.: C02F 1/52, C01F 7/14, C01F 7/34, C02F 103/16

(54) **Plant and method for the treatment of waste liquids deriving from industrial processes**

(30) Priority: 16.11.2010 IT MO20100328
(71) Applicant: Italtecno S.r.l., 41122 Modena (IT)
(72) Inventor: Rossi, Marcello, 41023 Lama Mocogno MO (IT); Garuti, Giuseppe, 41126 Modena (IT)
(74) Representative: Modiano, Micaela Nadia

(57) **Abstract**

A method for the treatment of waste liquids originating from plants for the treatment of aluminum and comprising a first alkaline eluate (B) that contains sodium hydroxide (NaOH) and sodium aluminate (NaAlO₂), and a second acid eluate (A) which contains sulfuric acid (H₂SO₄) and aluminum sulfate (Al₂(SO₄)₃), which comprises the steps of:
a) supplying the alkaline eluate (B) in a reactor and the acid eluate (A) in a storage tank;
b) performing volumetric titration of the alkaline eluate (B) and the acid eluate (A), providing respectively an alkalinity value and an acidity value thereof;
c) heating the alkaline eluate (B) in the reactor to a temperature comprised between 40 and 50°C;
d) maintaining the temperature within said range, dispersing in the reactor the acid eluate (A) in a quantity that depends on the alkalinity and acidity values detected in step b), by injecting the acid eluate (A) into the alkaline eluate (B) in the reactor with an hourly injection flow-rate that does not exceed one fifth of the total volume of the reactor, so as to achieve the forming of an aluminum hydroxide precipitate (Al(OH)₃) on the bottom of said reactor;
e) simultaneously with step d), recirculating continuously the content of the reactor, drawing from the lower part and reintroducing from the upper part of the reactor, so that the volume of the content of the reactor that is recirculated in 1 hour is equal to at least 5 times the total volume of the reactor;
f) ending step e) upon reaching a pH value of the content of the reactor between 7,5 and 9.0;
g) removing the aluminum hydroxide precipitate (Al(OH)₃) from the bottom of said reactor.

## Description

The present invention relates to a method for the treatment of liquid waste of plants for the treatment of aluminum and an apparatus for such treatment of liquid waste.

As is known, in anodic oxidation plants there are normally several stages of chemical and electrochemical treatment of aluminum. Each one of these stages generates pollutant subproducts, normally in liquid form, which must be eliminated in plants for the treatment of liquid waste which are generally present in factories that perform this type of production.

For the treatment of liquid waste from the anodic oxidation plants, there are traditional processes which are universally applied and consist in the conveying of the liquid waste, both alkaline and acid, to special reactors where mixing thereof occurs until the pH of precipitation of aluminum hydroxide is reached (comprised between 7.0 and 9.5). This neutralization reaction occurs by simply mixing solutions with acid pH and solutions with alkaline pH.

The precipitation reaction can be regarded as a combination, in variable proportions, of the following chemical reactions:
1. 6NaOH(solution) + Al₂(SO₄)₃(solution) → 3Na₂SO₄ (solution) + 2Al(OH)₃(solid);
   i.e., an aqueous solution of sodium hydroxide mixed with an aqueous solution of aluminum sulfate produces sodium sulfate in aqueous solution and precipitate of aluminum hydroxide, as products of the reaction; and
2. 2NaAlO₂(solution) + H₂SO₄(solution) + 2H₂O →Na₂SO₄ (solution) + 2Al(OH)₃(solid);
   i.e., an aqueous solution of sodium aluminate mixed with an aqueous solution of sulfuric acid and water produces an aqueous solution of sodium sulfate and a precipitate of aluminum hydroxide, as products of the reaction.

The formation of the precipitate of aluminum hydroxide, under these conditions, is almost instantaneous.

The sludge that forms, rich in aluminum hydroxide precipitate, is a sort of gel, very bulky, which retains a large amount of water. The percentage of water present in such product, even after being subjected to filtering with a filter press, is usually comprised between 75% and 85% by weight of water over mud, and can be eliminated only by way of drying processes.

These methods and processes of treatment of the liquid waste deriving from processes of treatment of aluminum exhibit drawbacks, including the production of a discard material (sludge) comprising a high percentage of water, which has considerable encumbrances in terms of space and weight.

Moreover, the sludge thus produced must be disposed of by specialist companies, with significant costs for the companies that operate in the field of anodic oxidation. Generally, the costs are directly proportional to the weight and volume of the sludge.

Moreover, the sludge has a high water content which must be disposed of and/or recovered and this can involve a further increase in the plant costs, if an apparatus has to be provided for the drying of such sludge.

The aim of the present invention is to eliminate the above-mentioned drawbacks of the state of the art by a treatment of the waste deriving from processes of treatment of the waste water of plants for the treatment of aluminum and a corresponding apparatus that enables the substantial reduction of the volume of discard sludges and of the percentage by weight of water contained therein.

Within this aim, an object of the invention is to allow an optimization of the reaction parameters that is such as to ensure characteristics of the discard mud, in particular of the aluminum hydroxide precipitate, that are constant over time and facilitate the steps of transport, conveyance to disposal, filtering, and post-processing thereof.

Another object of the present invention is to provide a simple structure, that is relatively easy and practical to implement, safe to use and effective in operation, and relatively low-cost.

This aim and these objects are all achieved by a method for the treatment of waste liquids originating from plants for the treatment of aluminum and comprising at least one first alkaline eluate that contains sodium hydroxide (NaOH) and sodium aluminate (NaAlO₂), and a second acid eluate which contains sulfuric acid (H₂SO₄) and aluminum sulfate (Al₂(SO₄)₃), which comprises the steps of:
a) supplying the alkaline eluate and the acid eluate, keeping them separate, respectively, in a reactor and in a storage tank;
b) volumetric titration of the alkaline eluate and the acid eluate, providing respectively an alkalinity value and an acidity value thereof;
c) heating the alkaline eluate in said reactor to a temperature comprised between 40 and 50°C;
d) maintaining the temperature within said range, dispersing in the reactor of step c) the acid eluate in a quantity that depends on the alkalinity and acidity values detected in step b) and is capable of achieving in the content of the reactor of step f) a pH between 7.5 and 9.0, by injecting the acid eluate into the alkaline eluate in said reactor with an hourly injection flow-rate that does not exceed one fifth of the total volume of the reactor, in order to achieve the forming of an aluminum hydroxide precipitate (Al(OH)₃) on the bottom of said reactor;
e) simultaneously with step d), recirculating continuously the content of the reactor, drawing from the lower part and reintroducing from the upper part of the reactor, so that the volume of the content of the reactor that is recirculated in 1 hour is equal to at least 5 times the total volume of the reactor;
f) ending step e) upon reaching a pH value of the content of the reactor between 7.5 and 9.0;
g) removing the aluminum hydroxide precipitate (Al(OH)₃) from the bottom of said reactor.

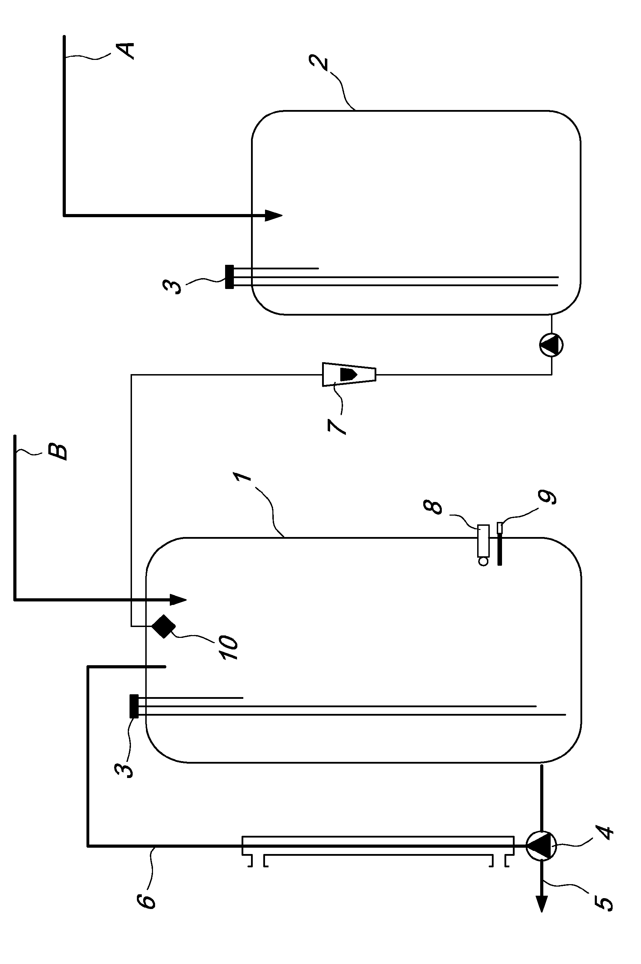

The above aim and objects are also achieved by an apparatus for the treatment of liquid waste originating from plants for the treatment of aluminum and comprising at least one first alkaline eluate that contains sodium hydroxide (NaOH) and sodium aluminate (NaAlO₂) and a second acid eluate that contains sulfuric acid (H₂SO₄) and aluminum sulfate (Al₂(SO₄)₃), which comprises at least one reactor (1, see Figure 1) for the containment of the alkaline eluate, at least one tank for the storage of the acid eluate and means for drawing the acid eluate from the storage tank to the reactor, comprising means for heating the reactor for the controlled heating of at least one of the alkaline eluate and the acid eluate, said drawing means comprising at least one nozzle (10) for the dispersion of the acid eluate in the alkaline eluate inside the heated reactor in order to promote the neutralization reaction of the content of the reactor and the precipitation of aluminum hydroxide (Al(OH)₃) to the bottom of the reactor.

Further characteristics and advantages of the present invention will become more apparent from the detailed description of a preferred, but not exclusive, embodiment, illustrated by way of non-limiting example in the accompanying drawing, wherein the sole Figure which shows an apparatus according to the invention.

With particular reference to the figure, the reference numeral 1 designates a reactor, 2 designates a tank for storage of the waste acids A, 3 designates level sensors on the reactor 1 and on the tank 2, 4 designates a recirculation and extraction pump, 5 designates a piping leading to filtration, 6 designates means for heating, 7 designates a flow meter, 8 designates a pH sensor, 9 designates a temperature sensor, A designates acid eluates and B alkaline eluates.

Within the scope of the present invention, the term "sludge" is used to designate a precipitate of aluminum hydroxide (Al(OH)₃) having a fluid or solid aspect depending on the percentage of water.

Within the scope of the present invention, the term "alkaline eluate" (B) is used to designate a solution of sodium hydroxide (NaOH) with a concentration between 15 and 30 g/l and sodium aluminate (NaAlO₂) with a concentration between 75 and 150 g/l; the term "acid eluate" (A) is used to designate a solution of sulfuric acid (H₂SO₄) with a concentration between 20 and 80 g/l and aluminum sulfate (Al₂(SO₄)₃) with a concentration between 30 and 60 g/l.

In practice it has been found that the invention as described achieves the set aims thanks to the precise control of the parameters that influence the hydration of the aluminum hydroxide that is formed in the process. In particular, it has surprisingly been found that the semi-solid sludge, comprising aluminum hydroxide and water, that is obtained at the end of the process according to the present invention has a considerably reduced volume with respect to the one obtained with the methods of the state of the art and that the water content of the sludge obtained according to the process of the present invention is less than 60% (water weight/total weight of sludge) whereas the sludges obtained with the methods of the state of the art comprise around 80% water.

In particular, in tests conducted on a pilot apparatus, the percentage of water in the sludges obtained according to the process of the present invention is 56% (weight/total weight of the sludge), as compared to 82% in the sludges obtained according to the traditional process.

In one aspect, the present invention relates to a method for the treatment of waste liquids originating from plants for the treatment of aluminum and comprising at least one first alkaline eluate (B) which contains sodium hydroxide (NaOH) and sodium aluminate (NaAlO₂) and a second acid eluate (A) which contains sulfuric acid (H₂SO₄) and aluminum sulfate (Al₂(SO₄)₃), which comprises the steps of:
a) supplying B and A, keeping them separate, respectively, in a reactor and in a storage tank;
b) performing volumetric titration of the alkaline eluate B and the acid eluate A, providing respectively an alkalinity value and an acidity value thereof;
c) heating the alkaline eluate B in said reactor to a temperature comprised between 40 and 50°C;
d) maintaining the temperature within said range, dispersing in the reactor of step c) the acid eluate A in a quantity that depends on the alkalinity and acidity values detected in step b) and capable of achieving in the content of the reactor of step f) a pH between 7.5 and 9.0, injecting the acid eluate A into the alkaline eluate B in said reactor with an hourly injection flow-rate that does not exceed one fifth of the total volume of the reactor, in order to achieve the forming of an aluminum hydroxide precipitate (Al(OH)₃) on the bottom of said reactor;
e) simultaneously with step d), recirculating continuously the content of the reactor, drawing from the lower part and reintroducing from the upper part of the reactor, so that the volume of the content of the reactor that is recirculated in 1 hour is equal to at least 5 times the total volume of the reactor;
f) ending step e) upon reaching a pH value of the content of the reactor between 7.5 and 9.0;
g) removing the aluminum hydroxide precipitate (Al(OH)₃) from the bottom of said reactor.

The advantages of the sludges obtained by way of the method of the invention are considerable both in terms of reduction of disposal costs and in terms of saving space for storage.

Moreover, the sludges obtained by way of the method of the invention are microcrystalline in nature and can be much more easily filtered than those obtained with the processes of the state of the art, a characteristic that makes it possible to reduce the filtration times of the content of the reactor at the end of step f) of the method and to increase the general efficiency of the process.

Preferably, in the method according to the invention the pH value of step f) is comprised between 8 and 8.5.

Preferably, in the method according to the invention the hourly flow-rate of the addition in step d) does not exceed one fifth of the total volume of the reactor.

Preferably, in the method according to the invention the volume of the content of the reactor that is recirculated in one hour is at least 5 times the total volume of the reactor. More preferably, the volume is at least 10 times the total volume of the reactor.

Preferably, in the method of the invention, if necessary, the total acidity of A is modified prior to the addition of A in step d) so that a pH between 7.5 and 9.0 can be achieved in the content of the reactor in step f). More preferably, in the method according to the invention the correction of the pH of A is performed with hydrochloric acid or carbon dioxide.

In another aspect, the present invention relates to an apparatus for the treatment of liquid waste, comprising at least one first alkaline eluate B that contains sodium hydroxide (NaOH) and sodium aluminate (NaAlO₂) and a second acid eluate A that contains sulfuric acid (H₂SO₄) and aluminum sulfate (Al₂(SO₄)₃), originating from plants for the treatment of aluminum, which comprises at least one reactor 1 for the containment of such first alkaline eluate, at least one tank 2 for the storage of such second acid eluate and means for drawing such acid eluate from such storage tank to such reactor, comprising means 6 for heating the reactor 1 for the controlled heating of one or both of the first alkaline eluate B and the second acid eluate A, such drawing means comprising at least one nozzle 10 for the dispersion of A in B inside the heated reactor in order to promote the neutralization reaction of the content of the reactor and the precipitation of aluminum hydroxide (Al(OH)₃) to the bottom of such reactor.

Non-limiting examples of systems for the recirculation of the content of the reactor are: recirculation by way of a special pump, mechanical stirring, blowing in of compressed gases.

Preferably, the apparatus according to the invention comprises at least one mixing means which is associated internally with the reactor 1 for the mixing of B with A.

Non-limiting examples of such mixing means are: recirculation by way of a special pump, mechanical stirring, blowing in of compressed gases. Preferably, the apparatus according to the invention comprises at least one means for detecting one or both of temperature 9 and pH 8 of the content of the reactor 1.

Non-limiting examples of such detection means are: thermocouples, thermistors, specific electrodes for pH.

Preferably, the apparatus according to the invention comprises at least one means of drawing and/or filtering of the precipitate from the bottom of the reactor 1.

Non-limiting examples of such drawing and/or filtration means are: emptying by gravity, drawing of the flow of the recirculation pump, a dedicated pump, filter presses, centrifuges.

The invention thus conceived is susceptible of numerous modifications and variations, all of which are within the scope of the appended claims.

Moreover, all the details may be substituted by other, technically equivalent elements.

In practice the materials employed, as well as the contingent dimensions and shapes, may be any according to requirements but without for this reason extending beyond the scope of protection of the following claims.

The disclosures in Italian Patent Application No. M02010A000328 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method for the treatment of waste liquids originating from plants for the treatment of aluminum and comprising at least one first alkaline eluate (B) that contains sodium hydroxide (NaOH) and sodium aluminate (NaAlO₂), and a second acid eluate (A) which contains sulfuric acid (H₂SO₄) and aluminum sulfate (Al₂(SO₄)₃), which comprises the steps of:
a) supplying the alkaline eluate (B) and the acid eluate (A), keeping them separate, respectively, in a reactor and in a storage tank;
b) performing volumetric titration of the alkaline eluate (B) and the acid eluate (A), providing respectively an alkalinity value and an acidity value thereof;
c) heating the alkaline eluate (B) in said reactor to a temperature comprised between 40 and 50°C;
d) maintaining the temperature within said range, dispersing in the reactor of step c) the acid eluate (A) in a quantity that depends on the alkalinity and acidity values detected in step b) and is capable of achieving in the content of the reactor of step f) a pH between 7.5 and 9.0, by injecting the acid eluate (A) into the alkaline eluate (B) in said reactor with an hourly injection flow-rate that does not exceed one fifth of the total volume of the reactor, so as to achieve the forming of an aluminum hydroxide precipitate (Al(OH)₃) on the bottom of said reactor;
e) simultaneously with step d), recirculating continuously the content of the reactor, drawing from the lower part and reintroducing from the upper part of the reactor, so that the volume of the content of the reactor that is recirculated in 1 hour is equal to at least 5 times the total volume of the reactor;
f) ending step e) upon reaching a pH value of the content of the reactor between 7.5 and 9.0;
g) removing the aluminum hydroxide precipitate (Al(OH)₃) from the bottom of said reactor.

2. The method according to claim 1, wherein the pH value of step f) is comprised between 8 and 8.5.

3. The method according to one or more of the preceding claims, wherein the hourly flow-rate of the addition in step d) does not exceed one fifth of the total volume of the reactor.

4. The method according to one or more of the preceding claims, wherein the volume of the content of the reactor recirculated in 1 hour is at least 5 times the total volume of the content of the reactor.

5. The method according to claim 4, wherein said volume of the content of the reactor that is recirculated is at least 10 times the total volume of the reactor.

6. The method according to one or more of the preceding claims, wherein the acid eluate (A) is heated to a temperature comprised between 40 and 50°C and injected at the same temperature during step d).

7. The method according to one of the preceding claims, wherein the pH of A is corrected, if necessary, prior to the addition of the acid eluate (A) in step d), so that a pH of between 7.5 and 9.0 can be reached in the content of the reactor of step f).

8. The method according to claim 7, wherein pH correction is performed with hydrochloric acid and carbon dioxide.

9. An apparatus for the treatment of liquid waste, comprising at least one first alkaline eluate (B) that contains sodium hydroxide (NaOH) and sodium aluminate (NaAlO₂) and a second acid eluate (A) that contains sulfuric acid (H₂SO₄) and aluminum sulfate (Al₂(SO₄)₃), originating from plants for the treatment of aluminum, which comprises at least one reactor (1) for the containment of the alkaline eluate (B), at least one tank (2) for the storage of the acid eluate (A) and means for drawing the acid eluate (A) from said storage tank to said reactor, comprising means (6) for heating said reactor for the controlled heating of at least one of the alkaline eluate (B) and the acid eluate (A), said drawing means comprising at least one nozzle (10) for the dispersion of the acid eluate (A) in the alkaline eluate inside the heated reactor (1) to promote the neutralization reaction of the content of the reactor and the precipitation of aluminum hydroxide (Al(OH)₃) to the bottom of the reactor (1).

10. The apparatus according to claim 9, comprising at least one mixing means which is associated internally with said reactor for the mixing of the alkaline eluate (B) with the acid eluate (A) in atomized condition.

11. The apparatus according to one or more of the preceding claims, comprising at least one means for detecting at least one of the temperature (9) and the pH (8) of the content of the reactor (1).

12. The apparatus according to one or more of claims 10-11, comprising at least one means (5) for drawing and/or filtering the precipitate from the bottom of the reactor (1).
